# FASCICULE DE BREVET EUROPEEN

(11) **EP 2 140 789 B1**
(45) Date de publication et mention de la délivrance du brevet: **29.08.2012**
(21) Numéro de dépôt: 09356043.1
(22) Date de dépôt: 01.07.2009
(51) Int. Cl.: A47J 37/12

(54) **Appareil de cuisson comportant un couvercle avec fenêtre de visualisation**
Kochgerät, das einen Deckel mit Sichtfenster umfasst
Cooking appliance incorporating a lid with viewing window

(30) Priorité: 02.07.2008 FR 0803748
(43) Date de publication de la demande: 06.01.2010
(73) Titulaire: SEB SA, 69130 Ecully (FR)
(72) Inventeur: Payen, Jean-Marc, 21800 Quetigny (FR); Pellerin, Olivier, 21510 Minot (FR); Seurat, Frédéric, 21490 Bretigny (FR)
(74) Mandataire: Kiehl, Hubert

(56) Documents cités:
- EP-A- 0 343 141
- US-A- 4 903 587

## Description

La présente invention concerne le domaine technique des appareils de cuisson comprenant une cuve prévue pour contenir un bain de cuisson et un couvercle présentant une fenêtre de visualisation. La présente invention concerne notamment, mais non exclusivement les friteuses électriques.

Il est connu du document EP 1 224 896 un appareil de cuisson comportant un couvercle muni d'une fenêtre de visualisation ainsi que d'un dispositif de filtration des vapeurs de cuisson.

Dans les appareils du type précité, la taille réduite de la fenêtre de visualisation limite l'observation du contenu de la cuve. De plus la quantité importante de vapeurs de cuisson émise lors de la plongée d'aliments dans un bain de friture rend la vision à travers la fenêtre de visualisation peu satisfaisante. Par ailleurs les performances de filtration des vapeurs de cuisson sont généralement limitées.

L'augmentation de la taille de la fenêtre de visualisation favorise l'apparition de condensats sur la paroi inférieure du couvercle. La retombée de condensats dans la cuve de cuisson peut créer des explosions dans un bain de cuisson à base de matières grasses, notamment lorsque la taille des gouttes tombant dans le bain de cuisson devient importante.

Il est connu du document EP 0 150 516 un appareil de cuisson comportant une enceinte de cuisson présentant une admission d'air ainsi qu'une sortie d'air et de vapeurs de cuisson reliée à un dispositif d'aspiration et de filtration. L'enceinte de cuisson comprend une cuve et un couvercle, le couvercle comportant une fenêtre de visualisation. Une ouverture est prévue pour le passage de la poignée d'un panier de cuisson agencé dans la cuve. L'aspiration permet d'éviter la formation de buée sur la fenêtre de visualisation lorsque le couvercle est en place sur la cuve. Toutefois, la fenêtre de visualisation est surélevée par rapport au reste du couvercle. La fenêtre de visualisation peut présenter une première ouverture frontale décalée par rapport à la sortie d'air et de vapeur de cuisson du dispositif d'aspiration, ainsi qu'une deuxième ouverture arrière agencée à l'opposée de la première ouverture frontale, également décalée par rapport à la sortie d'air et de vapeur de cuisson. La largeur de la première ouverture frontale et la largeur de la deuxième ouverture arrière ne sont pas précisées. La deuxième ouverture arrière limite le flux d'air passant sous la fenêtre de visualisation. La fenêtre de visualisation divulguée dans ce document reste de taille réduite. Aucune indication précise n'est donnée sur l'efficacité de la construction proposée pour éviter la retombée de condensats dans la cuve.

Il est connu du document WO 93/10698 un appareil de cuisson à ventilation forcée comportant une cuve et un couvercle, dans lequel l'admission d'air et la sortie d'air et de vapeurs de cuisson sont dimensionnées et positionnées de manière à créer en conjonction avec un débit d'aspiration minimal une veine de balayage d'air de la chambre de cuisson. Toutefois ce document ne divulgue pas d'appareil avec un couvercle comportant une fenêtre de visualisation.

Un appareil selon les caractéristiques du préambule de la revendication 1 est connu du document EP 0 343 141.

Un objet de la présente invention est de proposer un appareil de cuisson comprenant une cuve prévue pour contenir un bain de cuisson et un couvercle présentant une fenêtre de visualisation, dans lequel l'observation du contenu de la cuve est améliorée.

Un autre objet de la présente invention est de proposer un appareil de cuisson comprenant une cuve prévue pour contenir un bain de cuisson et un couvercle présentant une fenêtre de visualisation, dans lequel la retombée de condensats dans la cuve peut être limitée lors de la cuisson.

Un autre objet de la présente invention est de proposer un appareil de cuisson comprenant une cuve prévue pour contenir un bain de cuisson et un couvercle présentant une fenêtre de visualisation, dans lequel la température du couvercle peut être limitée lors de la cuisson.

Un autre objet de la présente invention est de proposer un appareil de cuisson comprenant une cuve prévue pour contenir un bain de cuisson et un couvercle présentant une fenêtre de visualisation, dans lequel une filtration efficace des vapeurs de cuisson peut être obtenue.

Ces objets sont atteints avec un appareil de cuisson, notamment une friteuse électrique, comportant une enceinte de cuisson comprenant une cuve et un couvercle, le couvercle comportant une fenêtre de visualisation agencée au moins partiellement au dessus de la cuve, l'enceinte de cuisson présentant une admission d'air ainsi qu'une sortie d'air et de vapeurs de cuisson reliée à un dispositif d'aspiration, l'air introduit par l'admission d'air étant dirigé vers la sortie d'air et de vapeurs de cuisson en passant sous la fenêtre de visualisation, du fait que la sortie d'air et de vapeurs de cuisson comporte une pluralité de perforations formant des conduits s'étendant en regard de la fenêtre de visualisation. Ces dispositions permettent de favoriser l'entraînement des vapeurs de cuisson vers la sortie d'air et de vapeur de cuisson, en limitant le contact des vapeurs de cuisson avec la fenêtre de visualisation. L'agencement des perforations permet d'améliorer le balayage de la face inférieure de la fenêtre de visualisation. Le flux d'air passant sous la fenêtre de visualisation permet de réaliser un balayage des vapeurs de cuisson écartant lesdites vapeurs de cuisson de la fenêtre de visualisation. Ce balayage s'effectuant au dessous de la fenêtre de visualisation permet d'éviter ou de limiter fortement le dépôt de vapeurs grasses sur la face inférieure de la fenêtre de visualisation, améliorant ainsi la visibilité à travers ladite fenêtre de visualisation. Ce balayage s'effectuant au dessous de la fenêtre de visualisation permet aussi de limiter la formation de gouttelettes de condensats sur la face inférieure de la fenêtre de visualisation. Ce balayage permet aussi de diluer les vapeurs de cuisson dans l'air aspiré plus froid. La température des rejets gazeux issus du dispositif d'aspiration et la température du couvercle sont diminuées.

Avantageusement, l'admission d'air est agencée en regard de la sortie d'air et de vapeurs de cuisson. Cette disposition permet de limiter les pertes de charge et d'améliorer l'efficacité de l'aspiration.

Selon une forme de réalisation avantageuse, l'air introduit par l'admission d'air est canalisé sous la fenêtre de visualisation vers la sortie d'air et de vapeurs de cuisson par la partie supérieure de l'enceinte de cuisson agencée au dessus de la cuve. La canalisation de l'air aspiré dans l'enceinte de cuisson permet de limiter, voire d'éviter, les turbulences dans la partie supérieure de l'enceinte de cuisson, améliorant ainsi l'évacuation des vapeurs de cuisson hors de l'enceinte de cuisson.

Avantageusement alors, pour une meilleure efficacité, l'air introduit dans l'enceinte de cuisson par l'admission d'air et aspiré par la sortie d'air et de vapeurs de cuisson balaye au moins 80% de la largeur de la surface de la fenêtre de visualisation agencée au dessus de la cuve.

Avantageusement encore la surface de la fenêtre de visualisation est supérieure ou égale à 50% de la surface de la cuve. Grâce au dispositif d'aspiration, la surface importante de la fenêtre de visualisation permet une observation aisée du contenu de la cuve lors de la cuisson sans favoriser la formation de condensats susceptibles de retomber dans la cuve de cuisson.

Avantageusement encore la face inférieure de la fenêtre de visualisation présente un profil ascendant entre l'admission d'air et la sortie d'air et de vapeurs de cuisson. Cette disposition permet de favoriser l'aspiration de l'air et des vapeurs de cuisson.

Avantageusement alors la fenêtre de visualisation est réalisée en verre. Bien que le verre soit plus propice à la formation de condensats que les matières plastiques transparentes résistant aux températures élevées et à l'hydrolyse, telles que notamment des polysulfones, le dispositif d'aspiration proposé permet d'éviter la formation de condensats.

Avantageusement encore l'admission d'air et la sortie d'air et de vapeurs de cuisson s'étendent sur au moins 80% de la largeur de la fenêtre de visualisation agencée au dessus de la cuve. Cette disposition permet un meilleur balayage de la face inférieure de la fenêtre de visualisation.

Avantageusement alors, l'admission d'air s'étend sur au moins 80% de la largeur de la cuve. Cette disposition permet un meilleur balayage de la surface de la cuve entraînant une meilleure extraction des vapeurs de cuisson.

Avantageusement encore, la sortie d'air et de vapeurs de cuisson s'étend sur au moins 80% de la largeur de la cuve. Cette disposition permet une meilleure aspiration des vapeurs de cuisson et de l'air introduit dans l'enceinte de cuisson.

Avantageusement encore, l'admission d'air et la sortie d'air et de vapeurs de cuisson sont ménagées de manière opposée par rapport à la cuve. Cette disposition permet un meilleur balayage de la surface de la cuve entraînant une meilleure extraction des vapeurs de cuisson.

Avantageusement encore, la distance entre l'admission d'air et la sortie d'air et de vapeurs de cuisson est supérieure à la largeur de l'admission d'air. Cette disposition permet d'obtenir une aspiration plus homogène et une meilleure évacuation de l'air chargé de vapeurs de cuisson.

Avantageusement encore, la distance entre l'admission d'air et la sortie d'air et de vapeurs de cuisson est supérieure à la largeur de la sortie d'air et de vapeurs de cuisson. Cette disposition permet de limiter les pertes de charge et d'obtenir une aspiration plus efficace pour une surface de cuve donnée.

Selon une forme de réalisation avantageuse, la cuve est agencée dans un boîtier extérieur. Cette disposition permet de diminuer la température des parois latérales de l'appareil.

Avantageusement alors, la cuve est montée amovible par rapport au boîtier extérieur. Cette disposition permet de faciliter le nettoyage de l'appareil.

Avantageusement alors l'admission d'air est ménagée entre le boîtier extérieur et le couvercle. Cette disposition permet de simplifier la construction de l'appareil.

Avantageusement encore, le dispositif d'aspiration est amovible par rapport à la cuve. Cette disposition permet de faciliter le nettoyage de l'appareil.

Avantageusement alors, le dispositif d'aspiration est porté par un boîtier de commande. Si désiré, le boîtier de commande peut porter une résistance chauffante prévue pour être disposée dans la cuve.

Avantageusement alors, le dispositif d'aspiration est logé dans le boîtier de commande. Cette disposition permet de simplifier l'utilisation de l'appareil.

Avantageusement encore, le dispositif d'aspiration est associé à un dispositif de filtration. Cette disposition permet d'améliorer les performances de l'appareil.

Avantageusement alors le dispositif de filtration comporte un élément de filtration amovible par rapport au dispositif d'aspiration. Cette disposition permet de simplifier l'utilisation de l'appareil.

Avantageusement encore, le dispositif d'aspiration présente une évacuation de vapeurs de cuisson disposée latéralement par rapport au boîtier de commande. Cette disposition permet de réduire la taille du boîtier de commande et d'éviter que l'utilisateur ne soit gêné par les vapeurs de cuisson sortant de l'appareil lors de l'utilisation du boîtier de commande, notamment pour régler une température de cuisson et/ou un temps de cuisson.

L'invention sera mieux comprise à l'étude d'un exemple de réalisation, pris à titre nullement limitatif, illustré dans les figures annexées 1 à 12, dans lesquelles :
- la figure 1 est une vue en perspective et en éclaté d'un exemple d'un appareil de cuisson selon l'invention,
- la figure 2 est une vue en perspective assemblée de l'appareil illustré sur la figure 1,
- la figure 3 est une vue en perspective de l'appareil illustré sur la figure 2, dans laquelle le couvercle et un élément de filtration ont été retirés.
- la figure 4 est une vue en perspective avant de l'unité de filtration de l'appareil illustré sur les figures 1 et 2,
- la figure 5 est une vue en perspective arrière et en éclaté de l'unité de filtration illustrée sur la figure 4.
- la figure 6 est une vue latérale en coupe longitudinale de l'appareil illustré sur les figures 1 et 2,
- la figure 7 est une vue en perspective en coupe partielle longitudinale et transversale de l'appareil illustré sur les figures 1 et 2,
- la figure 8 est une vue arrière en coupe transversale au niveau de la cuve de l'appareil illustré sur les figures 1 et 2,
- la figure 9 est une vue de face en coupe transversale au niveau de la cuve de l'appareil illustré sur les figures 1 et 2,
- la figure 10 est une vue de face en coupe transversale au niveau du dispositif de ventilation de l'appareil illustré sur les figures 1 et 2,
- la figure 11 est une vue partielle en perspective de l'appareil illustré sur les figures 1 et 2 montrant un dispositif de sécurité associé à l'unité de filtration,
- la figure 12 est une vue partielle de côté de l'appareil illustré sur les figures 1 et 2.

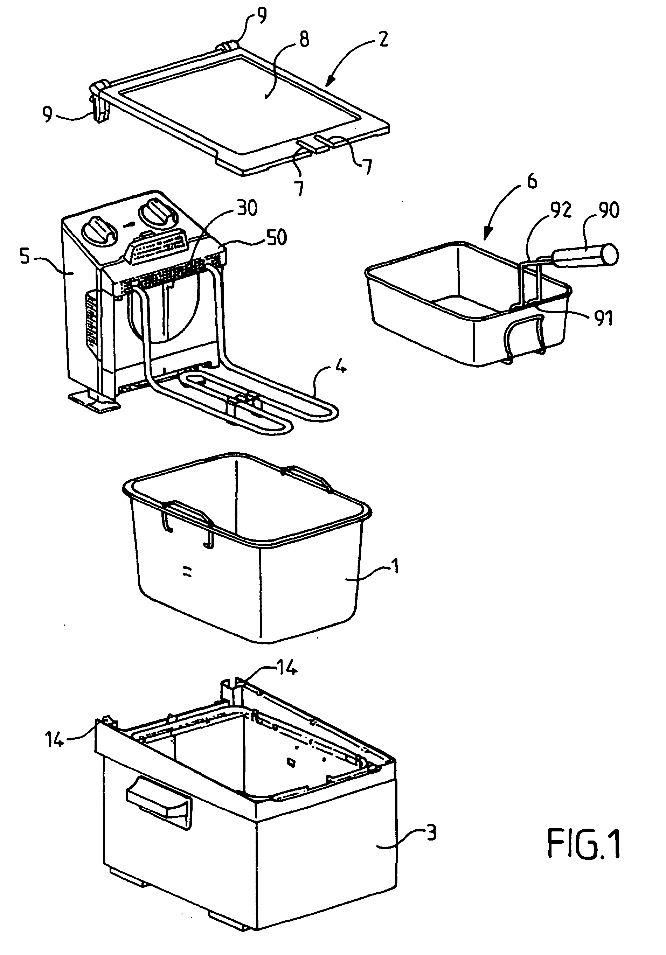

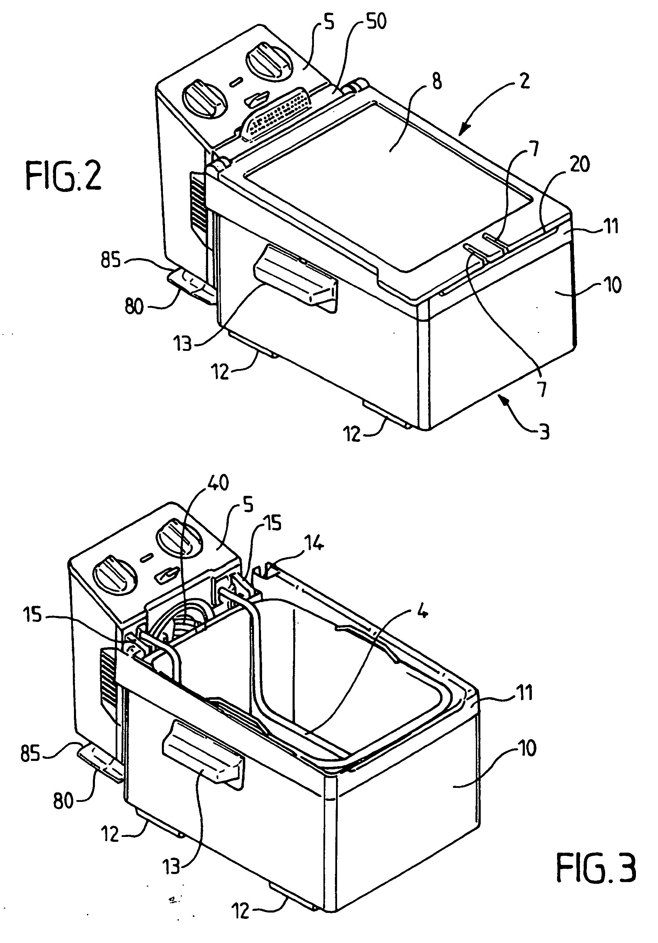

Les figures 1 et 2 illustrent un appareil de cuisson, notamment une friteuse électrique, comportant une enceinte de cuisson comprenant une cuve 1 et un couvercle 2. La cuve 1 est agencée dans un boîtier extérieur 3. La cuve 1 est montée amovible par rapport au boîtier extérieur 3.

L'appareil comporte une résistance électrique chauffante 4 reliée à un boîtier de commande 5 séparable de la cuve 1.

La cuve 1 est prévue pour recevoir un bain de cuisson. Un panier 6 est prévu pour être placé dans la cuve 1 et pour recevoir les aliments. Le panier 6 peut notamment présenter des parois latérales et/ou un fond ajourés et/ou grillagés. Le panier 6 présente une poignée 90.

Le couvercle 2 présente des encoches 7 prévues pour le passage de la poignée 90. La poignée 90 présente une zone d'appui inférieure 91 prévue pour la tenue du panier 6 en position relevée dans la cuve 1. La poignée 90 présente une zone d'appui supérieure 92 prévue pour la tenue du panier 6 en position abaissée dans la cuve 1.

Le couvercle 2 comporte une fenêtre de visualisation 8. La surface de la fenêtre de visualisation 8 est supérieure ou égale à 50% de la surface de la cuve 1. Avantageusement la fenêtre de visualisation 8 est réalisée en verre.

Le boîtier extérieur 3 présente une partie inférieure 10 réalisée par exemple en tôle métallique et une partie supérieure 11 avantageusement réalisée en matière plastique. La partie inférieure 10 est munie d'éléments de support 12. Une poignée 13 est disposée sur chacune des faces latérales de la partie inférieure 10. La partie supérieure 11 est prévue pour supporter la cuve 1. Le couvercle 2 comporte des tenons 9 pivotants prévus pour être engagés dans des logements 14 du boîtier extérieur 3. Ainsi le couvercle 2 est monté pivotant sur le boîtier extérieur 3. Le couvercle 2 est monté amovible sur le boîtier extérieur 3.

Tel que visible sur la figure 3, la résistance électrique chauffante 4 est agencée dans la cuve 1. Le boîtier de commande 5 est assemblé avec le boîtier extérieur 3, par exemple au moyen de glissières, non représentées sur les figures. Avantageusement, le boîtier extérieur 3 porte le boîtier de commande 5.

L'enceinte de cuisson présente une admission d'air 20, mieux visible sur la figure 2, ainsi qu'une sortie d'air et de vapeurs de cuisson 30, mieux visible sur la figure 1, reliée à un dispositif d'aspiration 40, mieux visible sur la figure 3. L'admission d'air 20 est agencée en regard de la sortie d'air et de vapeurs de cuisson 30, de manière à limiter les pertes de charge. Cette disposition favorise l'obtention d'un flux laminaire d'air entrant par l'admission d'air 20 lorsque les émissions de vapeur de cuisson sont faibles. Cette disposition permet une meilleure évacuation de l'air et des vapeurs de cuisson lorsque les émissions de vapeur de cuisson sont plus importantes, notamment lors de la plongée du panier 6 contenant les aliments à frire dans la cuve 1 recevant un bain de cuisson. Le couvercle 2 présente une paroi inférieure inclinée vers le haut entre l'admission d'air 20 et la sortie d'air et de vapeurs de cuisson 30. Tel que montré sur la figure 2, l'admission d'air 20 est ménagée entre le boîtier extérieur 3 et le couvercle 2.

Plus particulièrement, le dispositif d'aspiration 40 est porté par le boîtier de commande 5. Ainsi le dispositif d'aspiration 40 est amovible par rapport à la cuve 1.

Le dispositif d'aspiration 40 est associé à un dispositif de filtration 50, représenté sur les figures 1 et 2. Le dispositif de filtration 50 est avantageusement au moins partiellement agencé en amont du dispositif d'aspiration 40. Plus particulièrement, le dispositif de filtration 50 est porté par le boîtier de commande 5. Le dispositif de filtration 50 comporte un élément de filtration 51 amovible par rapport au dispositif d'aspiration 40.

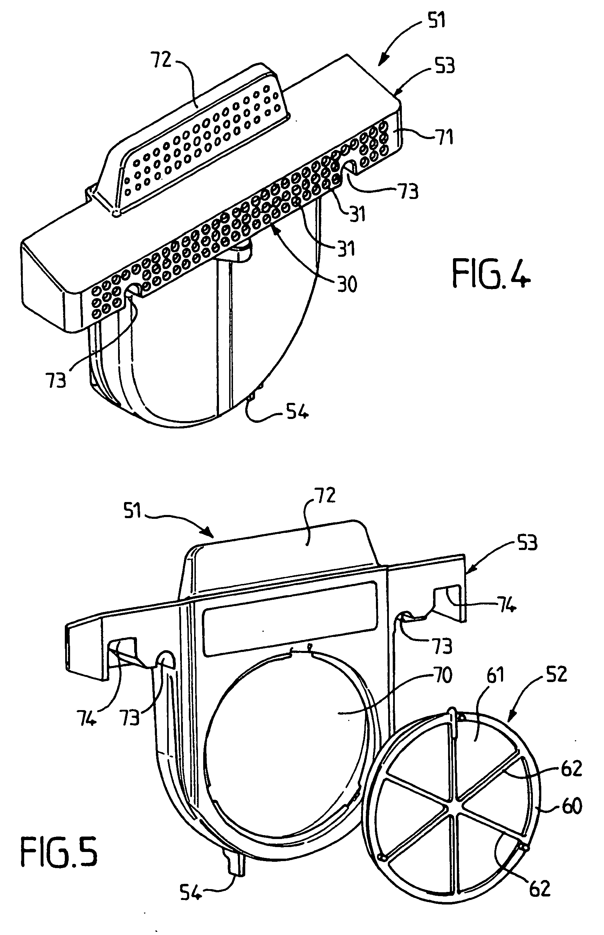

Tel que mieux visible sur les figures 4 et 5, l'élément de filtration 51 comprend une cartouche filtrante 52 montée amovible dans un support de cartouche 53. La cartouche filtrante 52 comporte un cadre 60 entourant une surface filtrante 61. Des bras 62 issus du cadre 60 segmentent la surface filtrante 61. La surface filtrante 61 comporte avantageusement un ou plusieurs filtres à charbon actif. La cartouche filtrante 52 est montée dans une ouverture 70 du support de cartouche 53, par exemple au moyen d'un verrouillage à baïonnette.

Tel que bien visible sur les figures 1, 4, 6, 7 et 9, la sortie d'air et de vapeurs de cuisson 30 comporte une pluralité de perforations 31 formant des conduits s'étendant en regard de la fenêtre de visualisation 8. Ainsi l'air aspiré par le dispositif d'aspiration 40 tend à balayer la face inférieure de la fenêtre de visualisation 8.

La sortie d'air et de vapeurs de cuisson 30 est agencée sur le support de cartouche 53. La sortie d'air et de vapeurs de cuisson 30 se présente avantageusement sous la forme d'une pluralité de perforations 31 ménagées dans une paroi frontale 71 du support de cartouche 53. Le support de cartouche 53 forme un corps creux conduisant l'air et les vapeurs de cuisson de la sortie d'air et de vapeurs de cuisson 30 à la cartouche filtrante 52. Le support de cartouche 53 présente un organe de préhension 72. Le support de cartouche 53 présente des encoches inférieures 73 prévues pour le passage de la résistance électrique chauffante 4. Le support de cartouche 53 présente des zones d'appui 74 prévues pour reposer sur le boîtier de commande 5, plus particulièrement sur des montants 15 visibles sur la figure 3.

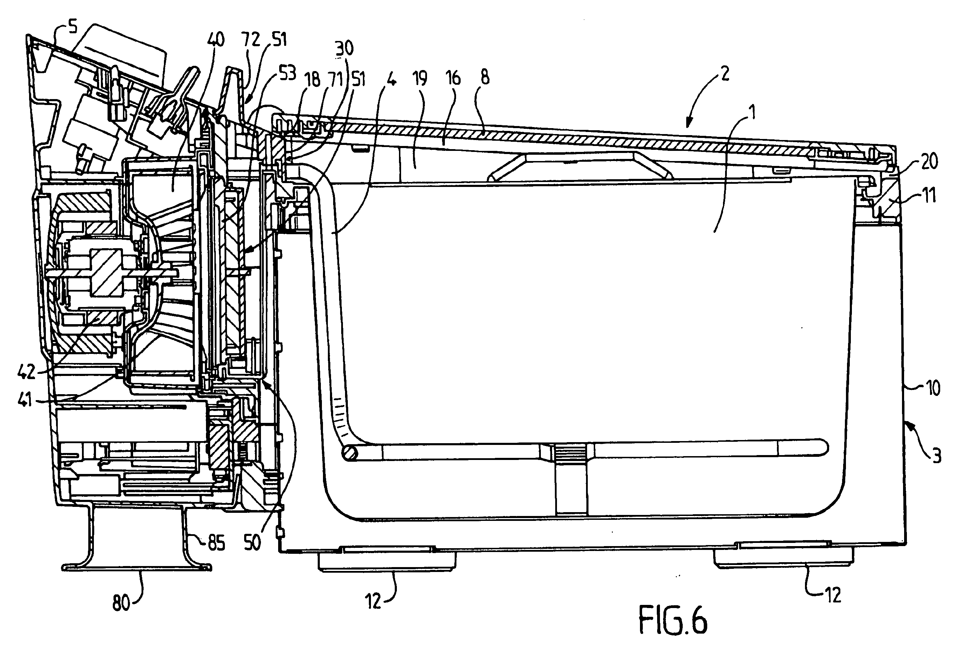

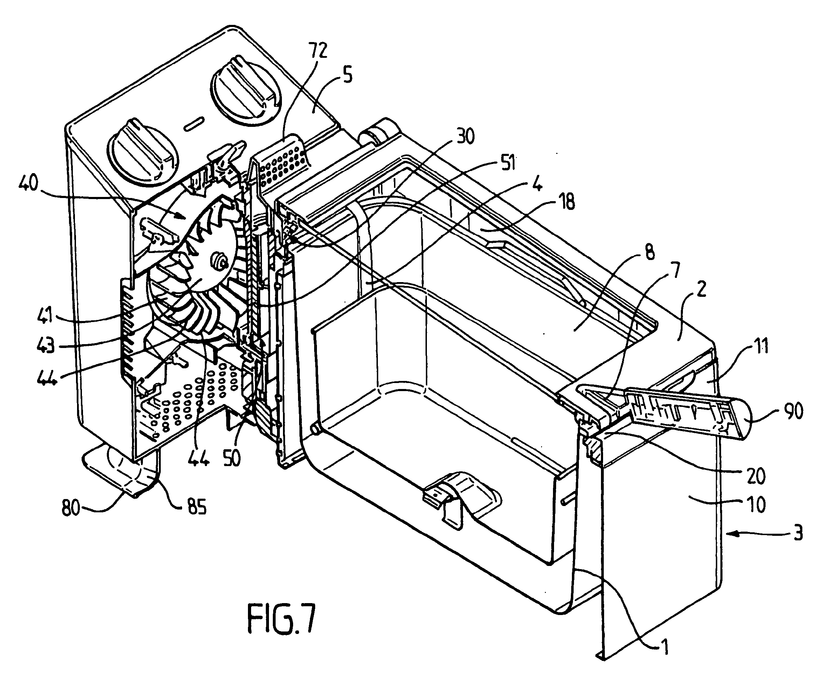

Tel que mieux visible sur les figures 6 et 7, la fenêtre de visualisation 8 est agencée au moins partiellement au dessus de la cuve 1. La face inférieure de la fenêtre de visualisation 8 présente un profil ascendant entre l'admission d'air 20 et la sortie d'air et de vapeurs de cuisson 30. Le dispositif d'aspiration 40 est logé dans le boîtier de commande 5. Le dispositif d'aspiration 40 comporte un organe de ventilation 41 entraîné par un moteur 42. L'organe de ventilation 41 est agencé latéralement par rapport à la cuve 1. L'organe de ventilation 41 présente une zone d'aspiration 43 agencée face à la surface filtrante 61 de l'élément de filtration 51. La zone d'aspiration 43 est entourée par des pales 44. Ainsi l'organe de ventilation 41 forme une turbine centrifuge. Tel que mieux visible sur la figure 3 l'organe de ventilation 41 est accessible lorsque l'élément de filtration 51 est retiré de l'appareil. L'admission d'air 20 et la sortie d'air et de vapeurs de cuisson 30 sont ménagées de manière opposée par rapport à la cuve 1.

La cuve 1 peut être définie par une dimension longitudinale s'étendant entre l'admission d'air 20 et la sortie d'air et de vapeurs de cuisson 30 ainsi que par une première dimension transversale du côté de l'admission d'air 20 et une deuxième dimension transversale du côté de la sortie d'air et de vapeurs de cuisson 30. La fenêtre de visualisation 8 peut aussi être définie par une dimension longitudinale s'étendant entre l'admission d'air 20 et la sortie d'air et de vapeurs de cuisson 30 ainsi que par une première dimension transversale du côté de l'admission d'air 20 et une deuxième dimension transversale du côté de la sortie d'air et de vapeurs de cuisson 30.

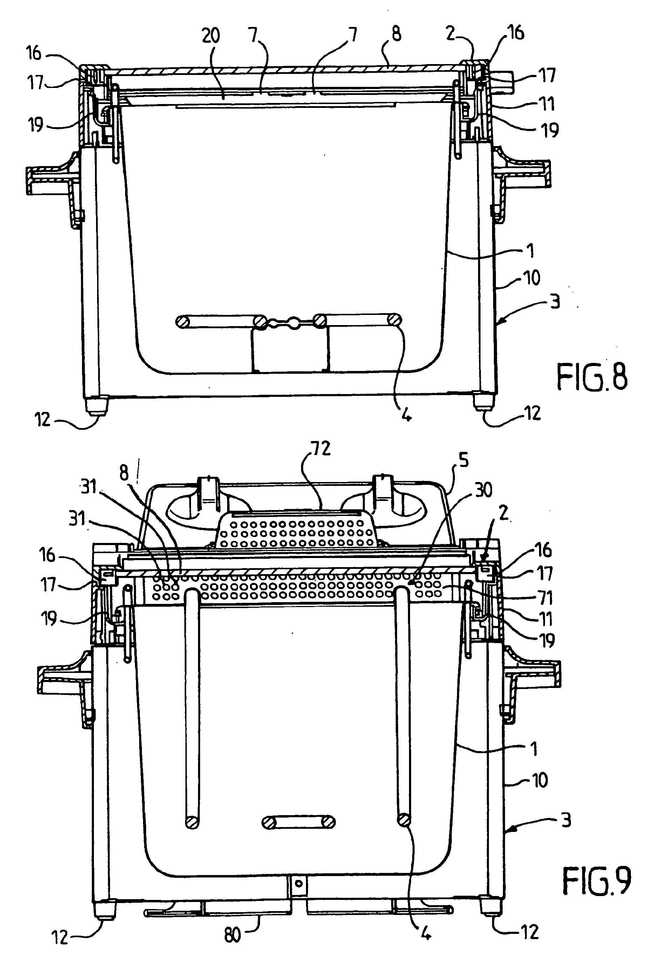

L'admission d'air 20 s'étend transversalement par rapport à la cuve 1 et par rapport à la fenêtre de visualisation 8. Tel que visible sur la figure 8, l'admission d'air 20 s'étend sur au moins 80% de la largeur de la fenêtre de visualisation 8 agencée au dessus de la cuve 1. L'admission d'air 20 s'étend sur au moins 80% de la largeur de la cuve 1.

La sortie d'air et de vapeurs de cuisson 30 s'étend transversalement par rapport à la cuve 1 et par rapport à la fenêtre de visualisation 8. Tel que visible sur la figure 9, la sortie d'air et de vapeurs de cuisson 30 s'étend sur au moins 80% de la largeur de la fenêtre de visualisation 8 agencée au dessus de la cuve 1. La sortie d'air et de vapeurs de cuisson 30 s'étend sur au moins 80% de la largeur de la cuve 1.

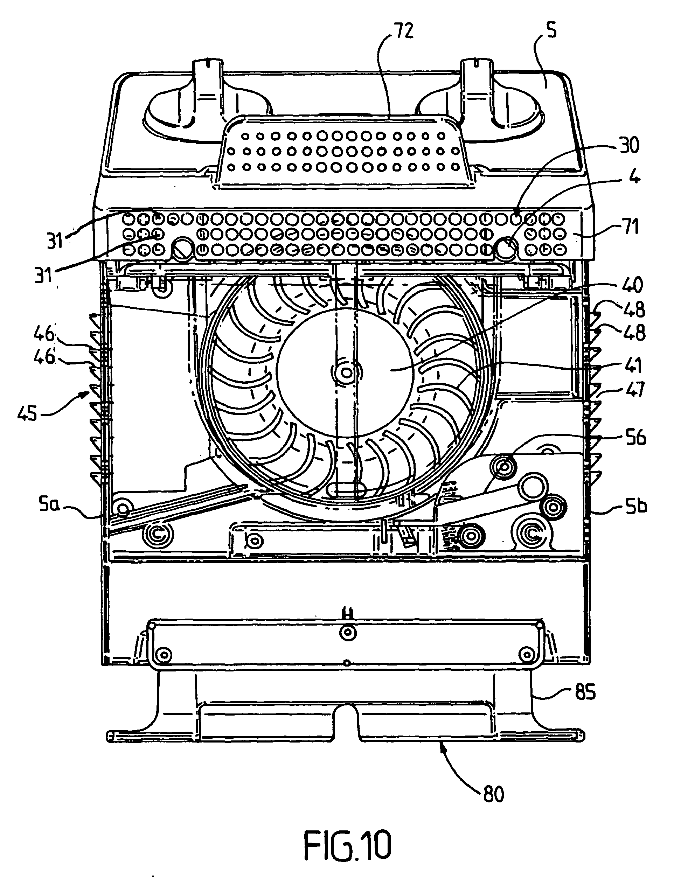

La sortie d'air et de vapeurs de cuisson 30 est agencée sur une face latérale du dispositif de filtration 50 adjacente à la cuve 1. La sortie d'air et de vapeurs de cuisson 30 est disposée frontalement par rapport au boîtier de commande 5, tel que visible notamment sur la figure 10. La sortie d'air et de vapeurs de cuisson 30 est agencée au dessus du niveau d'un bord supérieur de la cuve 1. Ainsi la paroi frontale 71 du support de cartouche 53 est agencée au dessus du niveau d'un bord supérieur de la cuve 1.

Tel que visible sur les figures 6, 7, 8 et 9, le couvercle 2 présente une face inférieure contribuant à canaliser l'air et les vapeurs de cuisson vers la sortie d'air et de vapeurs de cuisson 30, en coopération avec des faces intérieures 19 de la partie supérieure 11 du boîtier extérieur 3. Plus particulièrement, la fenêtre de visualisation 8 est montée entre deux éléments latéraux 16 du couvercle 2 prévus pour être logés entre des bords supérieurs 17 du boîtier extérieur 3 lorsque le couvercle 2 est rabattu, tel que visible sur les figures 8 et 9. Si désiré un joint 18 peut être monté sous le couvercle 2 afin de prendre appui sur l'élément de filtration 51 lorsque le couvercle est rabattu, tel que visible sur la figure 6. En alternative une entrée d'air additionnelle agencée entre le couvercle 2 et l'élément de filtration 51 ou le boîtier de commande 5 présente avantageusement une section inférieure à la section de l'admission d'air 20.

Tel que visible sur les figures 7, 8 et 9, la distance entre l'admission d'air 20 et la sortie d'air et de vapeurs de cuisson 30 est supérieure à la largeur de l'admission d'air 20 ; la distance entre l'admission d'air 20 et la sortie d'air et de vapeurs de cuisson 30 est supérieure à la largeur de la sortie d'air et de vapeurs de cuisson 30.

Tel que visible sur la figure 10, le dispositif d'aspiration 40 présente une évacuation de vapeurs de cuisson 45 ménagée sur un côté 5a du boîtier de commande 5. L'évacuation de vapeurs de cuisson 45 présente des ouies d'échappement 46 orientées vers le haut. Le dispositif d'aspiration 40 présente une autre évacuation de vapeurs de cuisson 47 ménagée sur un autre côté 5b du boîtier de commande 5, l'organe de ventilation 41 étant agencé entre le côté 5a et l'autre côté 5b du boîtier de commande. L'autre évacuation de vapeurs de cuisson 47 présente des ouies d'échappement 48 orientées vers le haut.

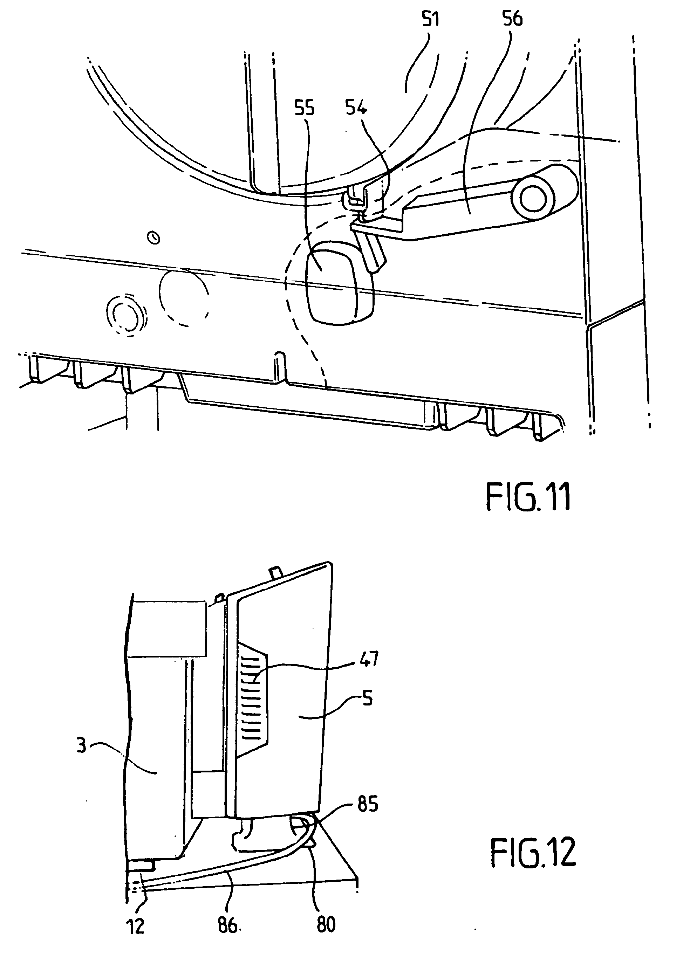

Tel que visible sur les figures 5 et 11, l'élément de filtration 51 comporte un organe de détection de présence 54 prévu pour actionner un interrupteur 55 autorisant le fonctionnement de l'appareil lorsque l'élément de filtration 51 est en place dans l'appareil et interdisant le fonctionnement de l'appareil lorsque l'élément de filtration 51 n'est pas en place dans l'appareil.

Tel que mieux visible sur la figure 5, l'organe de détection de présence 54 est disposé sur le support de cartouche 53. Plus particulièrement, tel que visible sur les figures 10 et 11, l'organe de détection de présence 54 actionne l'interrupteur 55 par l'intermédiaire d'un levier 56 monté pivotant.

Tel que visible sur la figure 10, le boîtier de commande 5 présente un organe de support 80. Tel que montré sur la figure 12, lorsque le boîtier de commande 5 est monté sur le boîtier extérieur 3 reposant sur un plan de travail, l'organe de support 80 s'étend à distance dudit plan de travail.

Tel que visible sur la figure 12, le boîtier de commande 5 présente une zone d'enroulement 85 d'un cordon électrique 86. Plus particulièrement, l'organe de support 80 est agencé en dessous de la zone d'enroulement 85 du cordon électrique 86. L'organe de support 80 forme un pied.

Un débit d'aspiration de 36 m³/h pour le dispositif d'aspiration 40 donne des performances d'aspiration satisfaisantes pour la cuisson de frites en bain d'huile à partir de 1 kg de pommes de terre fraîches. Le débit maximal instantané estimé de vapeurs de cuisson s'échappant du bain d'huile étant de l'ordre de 1,7 m³/h, la dilution des vapeurs de cuisson est d'environ 1:20. Un rapport de 30 entre le débit d'aspiration du dispositif d'aspiration 40 exprimé en m³/h et la capacité de l'appareil en pommes de terre fraîches exprimée en kg est considéré comme satisfaisant ; un rapport de 20 est considéré comme acceptable.

La présente invention fonctionne et s'utilise de la manière suivante.

L'utilisateur place la cuve 1 dans le boîtier extérieur 3, la résistance électrique chauffante 4 dans la cuve 1 et le couvercle 2 sur le boîtier extérieur 3. L'utilisateur peut programmer la température de cuisson et le temps de cuisson. L'utilisateur peut placer des aliments tels que des pommes de terre fraîches ou surgelées précuites dans le panier 6, de préférence en position relevée au dessus d'un bain de cuisson contenu dans la cuve 1. La mise en marche de l'appareil entraîne l'alimentation de la résistance électrique chauffante 4 et du dispositif d'aspiration 40. L'utilisateur rabat de préférence le couvercle 2 sur le boîtier extérieur 3. Le dispositif d'aspiration 40 aspire de l'air ambiant par l'admission d'air 20. L'air introduit par l'admission d'air 20 est dirigé vers la sortie d'air et de vapeurs de cuisson 30 en passant sous la fenêtre de visualisation 8. Plus particulièrement, l'air introduit par l'admission d'air 20 est canalisé sous la fenêtre de visualisation 8 vers la sortie d'air et de vapeurs de cuisson 30 par la partie supérieure de l'enceinte de cuisson agencée au dessus de la cuve 1. Le flux d'air généré par le dispositif d'aspiration 40 réalise un balayage des vapeurs de cuisson sous la fenêtre de visualisation 8 vers la sortie d'air et de vapeurs de cuisson 30. De préférence, l'air introduit dans l'enceinte de cuisson par l'admission d'air 20 et aspiré par la sortie d'air et de vapeurs de cuisson 30 balaye au moins 80% de la largeur de la surface de la fenêtre de visualisation 8 agencée au dessus de la cuve 1. Ce balayage contribue à évacuer les vapeurs de cuisson vers la sortie d'air et de vapeurs de cuisson 30, à diminuer la température de la fenêtre de visualisation 8, à éviter l'apparition de buée gênant la vision du contenu de la cuve 1, et à éviter la formation de condensats susceptibles de retomber dans le bain de cuisson, notamment lorsque l'utilisateur a plongé le panier 6 dans le bain de cuisson en position abaissée dans la cuve 1. L'air et les vapeurs de cuisson aspirés par le dispositif d'aspiration 40 sont ensuite filtrés par le dispositif de filtration 50 et rejetés à l'extérieur de l'appareil après filtration par l'évacuation de vapeurs de cuisson 45 et l'autre évacuation de vapeurs de cuisson 47.

L'appareil proposé permet de réaliser des cuissons couvercle fermé, en observant le contenu de l'enceinte de cuisson, avec une bonne visibilité, en évitant la retombée de condensats dans la cuve. De plus, grâce au flux d'air frais admis par l'admission d'air dans l'enceinte de cuisson, l'élévation de la température de la face supérieure du couvercle 2 lors de la cuisson peut être limitée, les vapeurs de cuisson sont filtrées grâce à l'élément de filtration 51, la température des rejets gazeux à l'extérieur de l'appareil par l'évacuation de vapeurs de cuisson 45 et par l'autre évacuation de vapeurs de cuisson 47 est également limitée. L'appareil proposé présente des conditions d'utilisations améliorées par rapport aux appareils usuels.

A titre de variante, la résistance électrique chauffante n'est pas nécessairement agencée dans l'enceinte de cuisson, mais peut notamment être disposée sous la cuve 1 dans le boîtier extérieur 3.

A titre de variante, le dispositif d'aspiration 40 n'est pas nécessairement agencé dans le boîtier de commande 5, mais pourrait notamment être agencé dans le boîtier extérieur 3.

A titre de variante, le dispositif d'aspiration 40 n'est pas nécessairement associé à une cuve 1 rectangulaire.

A titre de variante, le dispositif d'aspiration 40 n'est pas nécessairement associé à un dispositif de filtration.

A titre de variante le dispositif de filtration 50 ne comporte pas nécessairement un élément de filtration 51 amovible par rapport au dispositif d'aspiration 40.

A titre de variante, la fenêtre de visualisation 8 n'est pas nécessairement rectangulaire.

A titre de variante, la fenêtre de visualisation 8 n'est pas nécessairement formée par un hublot unique, mais peut comporter plusieurs hublots.

La présente invention n'est nullement limitée à l'exemple de réalisation décrit et à ses variantes, mais englobe de nombreuses modifications dans le cadre des revendications.

## Revendications

1. Appareil de cuisson, notamment friteuse électrique, comportant une enceinte de cuisson comprenant une cuve (1) et un couvercle (2), le couvercle (2) comportant une fenêtre de visualisation (8) agencée au moins partiellement au dessus de la cuve (1), l'enceinte de cuisson présentant une admission d'air (20) ainsi qu'une sortie d'air et de vapeurs de cuisson (30) reliée à un dispositif d'aspiration (40), l'air introduit par l'admission d'air (20) étant dirigé vers la sortie d'air et de vapeurs de cuisson (30) en passant sous la fenêtre de visualisation (8), **caractérisé en ce que** la sortie d'air et de vapeurs de cuisson (30) comporte une pluralité de perforations (31) formant des conduits s'étendant en regard de la fenêtre de visualisation (8).

2. Appareil de cuisson selon la revendication 1, **caractérisé en ce que** l'admission d'air (20) est agencée en regard de la sortie d'air et de vapeurs de cuisson (30).

3. Appareil de cuisson selon l'une des revendications 1 ou 2, **caractérisé en ce que** l'air introduit par l'admission d'air (20) est canalisé sous la fenêtre de visualisation (8) vers la sortie d'air et de vapeurs de cuisson (30) par la partie supérieure de l'enceinte de cuisson agencée au dessus de la cuve (1).

4. Appareil de cuisson selon l'une des revendications 1 à 3, **caractérisé en ce que** la face inférieure de la fenêtre de visualisation (8) présente un profil ascendant entre l'admission d'air (20) et la sortie d'air et de vapeurs de cuisson (30).

5. Appareil de cuisson selon l'une des revendications 1 à 4, **caractérisé en ce que** la fenêtre de visualisation (8) est réalisée en verre.

6. Appareil de cuisson selon l'une des revendications 1 à 5, **caractérisé en ce que** l'admission d'air (20) et la sortie d'air et de vapeurs de cuisson (30) sont ménagées de manière opposée par rapport à la cuve (1).

7. Appareil de cuisson selon l'une des revendications 1 à 6, **caractérisé en ce que** la cuve (1) est agencée dans un boîtier extérieur (3).

8. Appareil de cuisson selon la revendication 7, **caractérisé en ce que** la cuve (1) est montée amovible par rapport au boîtier extérieur (3).

9. Appareil de cuisson selon l'une des revendications 7 ou 8, **caractérisé en ce que** l'admission d'air (20) est ménagée entre le boîtier extérieur (3) et le couvercle (2).

10. Appareil de cuisson selon l'une des revendications 1 à 9, **caractérisé en ce que** le dispositif d'aspiration (40) est amovible par rapport à la cuve (1).

11. Appareil de cuisson selon la revendication 10, **caractérisé en ce que** le dispositif d'aspiration (40) est porté par un boîtier de commande (5).

12. Appareil de cuisson selon la revendication 11, **caractérisé en ce que** le dispositif d'aspiration (40) est logé dans le boîtier de commande (5).

13. Appareil de cuisson selon la revendication 12, **caractérisé en ce que** le dispositif d'aspiration (40) présente une évacuation de vapeurs de cuisson (45) disposée latéralement par rapport au boîtier de commande (5).

14. Appareil de cuisson selon l'une des revendications 1 à 13, **caractérisé en ce que** le dispositif d'aspiration (40) est associé à un dispositif de filtration (50).

15. Appareil de cuisson selon la revendication 14, **caractérisé en ce que** le dispositif de filtration (50) comporte un élément de filtration (51) amovible par rapport au dispositif d'aspiration (40).

## Claims

1. A cooking appliance, particularly an electric deep fryer, containing a cooking chamber comprising a bowl (1) and a cover (2), the cover (2) comprising a viewing window (8) arranged at least partially above the bowl (1), the cooking chamber having an air inlet (20) as well as an air and cooking vapour outlet (30) connected to a suction device (40), the air introduced through the air inlet (20) being directed towards the air and cooking vapour outlet (30) by passing under the viewing window (8), **characterised in that** the air and cooking vapour outlet (30) contains a number of perforations (31) forming ducts extending opposite the viewing window (8).

2. A cooking appliance according to claim 1, **characterised in that** the air inlet (20) is arranged opposite the air and cooking vapour outlet (30).

3. A cooking appliance according to one of claims 1 or 2, **characterised in that** the air introduced through the air inlet (20) is channelled under the viewing window (8) towards the air and cooking vapour outlet (30) through the upper part of the cooking chamber arranged above the bowl (1).

4. A cooking appliance according to one of claims 1 to 3, **characterised in that** lower face of the viewing window (8) has an ascending profile between the air inlet (20) and the air and cooking vapour outlet (30).

5. A cooking appliance according to one of claims 1 to 4, **characterised in that** the viewing window (8) is made of glass.

6. A cooking appliance according to one of claims 1 to 5, **characterised in that** the air inlet (20) and the air and cooking vapour outlet (30) are arranged opposite to the bowl (1).

7. A cooking appliance according to one of claims 1 to 6, **characterised in that** the bowl (1) is arranged inside an outer housing (3).

8. A cooking appliance according to claim 7, **characterised in that** the bowl (1) is removably mounted with respect to the outer housing (3).

9. A cooking appliance according to one of claims 7 or 8, **characterised in that** the air inlet (20) is arranged between the outer housing (3) and the cover (2).

10. A cooking appliance according to one of claims 1 to 9, **characterised in that** the suction device (40) is removable with respect to the bowl (1).

11. A cooking appliance according to claim 10, **characterised in that** the suction device (40) is carried by a control unit (5).

12. A cooking appliance according to claim 11, **characterised in that** the suction device (40) is housed inside the control unit (5).

13. A cooking appliance according to claim 12, **characterised in that** the suction device (40) has a cooking vapour discharge (45) arranged laterally with respect to the control unit (5).

14. A cooking appliance according to one of claims 1 to 13, **characterised in that** the suction device (40) is associated with a filtration device (50).

15. A cooking appliance according to claim 14, **characterised in that** the filtration device (50) contains a filtration element (51) removable with respect to the suction device (40).

## Patentansprüche

1. Kochgerät, insbesondere elektrische Fritteuse, umfassend einen Garraum mit einem Behälter (1) und einem Deckel (2), wobei der Deckel (2) ein Sichtfenster (8) umfasst, das wenigstens teilweise über dem Behälter (1) angeordnet ist, wobei der Garraum einen Lufteinlass (20) sowie einen Austritt für Luft und Kochdämpfe (30) umfasst, der mit einer Saugvorrichtung (40) verbunden ist, wobei die durch den Lufteinlass (20) einströmende Luft zum Austritt für Luft und Kochdämpfe (30) geleitet wird, wobei sie unter dem Sichtfenster (8) durchströmt, **dadurch gekennzeichnet, dass** der Austritt für Luft und Kochdämpfe (30) eine Vielzahl von Perforationen (31) aufweist, die Gänge bilden, sie sich gegenüber dem Sichtfenster (8) erstrecken.

2. Kochgerät nach Anspruch 1, **dadurch gekennzeichnet, dass** der Lufteinlass (20) gegenüber dem Austritt für Luft und Kochdämpfe (30) angeordnet ist.

3. Kochgerät nach einem der Ansprüche 1 oder 2, **dadurch gekennzeichnet, dass** die durch den Lufteinlass (20) einströmende Luft unter dem Sichtfenster (8) zum Austritt für Luft und Kochdämpfe (30) durch den oberen Teil des Garraums, der über dem Behälter (1) angeordnet ist, kanalisiert wird.

4. Kochgerät nach einem der Ansprüche 1 bis 3, **dadurch gekennzeichnet, dass** die Unterseite des Sichtfensters (8) ein ansteigendes Profil zwischen dem Lufteinlass (20) und dem Austritt für Luft und Kochdämpfe (30) aufweist.

5. Kochgerät nach einem der Ansprüche 1 bis 4, **dadurch gekennzeichnet, dass** das Sichtfenster (8) aus Glas hergestellt ist.

6. Kochgerät nach einem der Ansprüche 1 bis 5, **dadurch gekennzeichnet, dass** der Lufteinlass (20) und der Austritt für Luft und Kochdämpfe (30) in Bezug auf den Behälter (1) gegenüberliegend eingerichtet sind.

7. Kochgerät nach einem der Ansprüche 1 bis 6, **dadurch gekennzeichnet, dass** der Behälter (1) in einem Außengehäuse (3) angeordnet ist.

8. Kochgerät nach Anspruch 7, **dadurch gekennzeichnet, dass** der Behälter (1) in Bezug auf das Außengehäuse (3) herausnehmbar angeordnet ist.

9. Kochgerät nach einem der Ansprüche 7 oder 8, **dadurch gekennzeichnet, dass** der Lufteinlass (20) zwischen dem Außengehäuse (3) und dem Deckel (2) eingerichtet ist.

10. Kochgerät nach einem der Ansprüche 1 bis 9, **dadurch gekennzeichnet, dass** die Saugvorrichtung (40) in Bezug auf den Behälter (1) herausnehmbar ist.

11. Kochgerät nach Anspruch 10, **dadurch gekennzeichnet, dass** die Saugvorrichtung (40) von einem Schaltgehäuse (5) getragen wird.

12. Kochgerät nach Anspruch 11, **dadurch gekennzeichnet, dass** die Saugvorrichtung (40) im Schaltgehäuse (5) untergebracht ist.

13. Kochgerät nach Anspruch 12, **dadurch gekennzeichnet, dass** die Saugvorrichtung (40) eine Abführung für die Kochdämpfe (45) aufweist, die seitlich in Bezug auf das Schaltgehäuse (5) angeordnet ist.

14. Kochgerät nach einem der Ansprüche 1 bis 13, **dadurch gekennzeichnet, dass** die Saugvorrichtung (40) an eine Filtervorrichtung (50) angeschlossen ist.

15. Kochgerät nach Anspruch 14, **dadurch gekennzeichnet, dass** die Filtervorrichtung (50) ein Filterelement (51) umfasst, das in Bezug auf die Saugvorrichtung (40) herausnehmbar ist.
